# EUROPÄISCHE PATENTANMELDUNG

(11) **EP 4 134 339 A1**
(43) Veröffentlichungstag der Anmeldung: **15.02.2023**
(21) Anmeldenummer: 22189422.3
(22) Anmeldetag: 09.08.2022
(51) Int. Cl.: B65G 33/12, B65G 33/14

(54) **SCHNECKENGEHÄUSEAUSKLEIDUNG**

(30) Priorität: 12.08.2021 DE 102021121041
(71) Anmelder: Wissing, Johannes, 48703 Stadtlohn (DE)
(72) Erfinder: Wissing, Johannes, 48703 Stadtlohn (DE)
(74) Vertreter: Habbel, Ludwig

(57) **Zusammenfassung**

Bei einer Schneckengehäuseauskleidung (1), die dazu bestimmt ist, in einem eine Förderschnecke (7) aufnehmenden, als Trog (6) oder Rohr (9) ausgestalteten Gehäuse zwischen der Schnecke (7) und dem Gehäuse angeordnet zu werden, wobei die Auskleidung an ihrer zur Schnecke (7) gerichteten inneren Oberfläche aus einem gleitfreudigen Material besteht und in Umfangsrichtung profiliert ist, derart, dass die Auskleidung (1) in Längsrichtung einen geringeren Gleitwiderstand aufweist als in Umfangsrichtung, schlägt die Erfindung vor, dass die Auskleidung (1) wenigstens zwei Rippen (2) aufweist, die sich in Längsrichtung erstrecken und miteinander durch einen nutförmigen Bereich verbunden sind, in welchem die Auskleidung (1) in ihrer inneren Oberfläche eine sich in Längsrichtung erstreckende Vertiefung (3) aufweist, und dass die Auskleidung (1) in Längsrichtung erstreckende Einkerbungen (4) aufweist, entlang welcher die Auskleidung (1) eine reduzierte Wandstärke aufweist derart, dass die Auskleidung (1) bei Raumtemperatur zu einem U-förmigen oder im wesentlichen ringförmigen Querschnitt verformbar ist.

## Beschreibung

Die Erfindung betrifft eine Auskleidung für das Gehäuse einer Förder- oder Pressschnecke, wobei das Gehäuse rohrförmig oder trogförmig ausgestaltet sein kann. Aus Gründen der sprachlichen Vereinfachung wird an Stelle des langen Begriffs der Schneckengehäuseauskleidung im Rahmen des vorliegenden Vorschlags häufig auch lediglich der Begriff der Auskleidung verwendet.

Aus der DE 40 40 695 A1 ist eine gattungsgemäße Schneckengehäuseauskleidung bekannt. Innerhalb eines rohrförmigen Gehäuses sind in Längsrichtung des Gehäuses bzw. der Schnecke einzelne Leisten aus Kunststoff montiert. Durch die Auskleidung wird erstens ein vorschneller Verschleiß des Gehäuses selbst verhindert, da die Schnecke nicht in direkten Kontakt mit dem Gehäuse kommt und vielmehr in den sie umgebenden Leisten gelagert ist. Zweitens wird durch diese Art der Lagerung erreicht, dass der Austrittsbereich der Schnecke einen möglichst freien Querschnitt aufweist, beispielsweise im Unterschied zu einem Lager am Ende der Schnecke, welches durch mehrere radial nach außen verlaufende Arme am Gehäuse gehalten ist und wobei die Arme den Austritt des von der Schnecke geförderten Guts behindern können.

Die Montage einzelner Leisten, die als Verschleißteile konzipiert sind und in regelmäßigen Wartungsintervallen ausgewechselt werden müssen, ist vergleichsweise aufwendig.

Aus der DE 198 46 091 A1 ist es bekannt, eine Auskleidungsschale aus einem gleitfreudigen Kunststoff zu verwenden, die einen U-förmigen Querschnitt aufweist und in einem nach oben offenen Schneckentrog eingesetzt wird. Es muss daher lediglich ein einziges Bauelement in das Gehäuse eingesetzt werden, was den Wartungsaufwand vereinfacht. Die Verwendung eines gleitfreudigen Kunststoffs sichert besonders lange Standzeiten der als Verschleißelement konzipierten Auskleidung. Die Auskleidungsschale wird an die Form des jeweiligen Schneckentrogs dadurch angepasst, dass entweder eine zunächst ebene Platte auf 200 °C erwärmt und dann in die gewünschte Form gebogen wird, in welcher sie nach Abkühlung verbleibt. Anschließend ist noch eine mechanische Bearbeitung erforderlich, um die nun geschaffene Schale auf die gewünschten Maße zu bringen. Alternativ kann die Schale durch Kaltverformung des Plattenmaterials erzeugt werden, so dass zwar die Erwärmung und die mechanische Bearbeitung entfällt, die Schale jedoch weniger formstabil und nicht stetig gebogen ist.

Bei schräg aufwärts laufenden Schnecken kann sich insbesondere in nach oben offenen Schneckentrögen das Problem ergeben, dass das zu fördernde Gut nicht nur in den Schneckengängen schräg aufwärts gefördert wird, sondern vielmehr über die Außenkante des Schneckengewindes nach unten fallen kann, so dass die Förderleistung der Schnecke erheblich beeinträchtigt werden kann. Zudem kann eine unerwünschte Zerkleinerung des nicht geförderten, sondern wiederholt umgewälzten Guts stattfinden.

Der Erfindung liegt die Aufgabe zugrunde, eine gattungsgemäße Schneckengehäuseauskleidung dahingehend zu verbessern, dass diese eine hohe Förderleistung der Schnecke ermöglicht und den Betrieb der Förder- oder Pressschnecke mit einem geringen Wartungsaufwand ermöglicht.

Diese Aufgabe wird durch eine Schneckengehäuseauskleidung nach Anspruch 1 gelöst. Vorteilhafte Ausgestaltungen sind in den Unteransprüchen beschrieben.

Die Erfindung schlägt mit anderen Worten vor, statt einzelner Leisten eine Art Matte zu schaffen, die bei Raumtemperatur in Form gebogen werden kann und daher ohne aufwändige Bearbeitung an das jeweilige Schneckengehäuse angepasst werden kann. Diese mattenähnliche Auskleidung weist den Vorteil auf, dass sie eine einfache Handhabung und damit einen geringen Zeitaufwand bei den verschleißbedingt regelmäßigen Wartungsarbeiten erfordert. Einkerbungen, die sich in Längsrichtung der Auskleidung erstrecken, bilden Schwächungs- oder Biegelinien, so dass die Auskleidung bei Raumtemperatur mit geringem Kraftaufwand polygonal zu einem U-förmigen oder auch ringförmigen Querschnitt verformt werden kann.

Dabei ist vorschlagsgemäß vorgesehen, dass die Auskleidung auf ihrer radial inneren Seite, also zur Schnecke hin, in Umfangsrichtung profiliert ist. Es ergeben sich einerseits wenigstens zwei Rippen, die in Längsrichtung verlaufen, sowie zwischen benachbarten Rippen wenigstens eine ebenfalls in Längsrichtung verlaufende Vertiefung, so dass im Bereich der Vertiefung ein Raum geschaffen wird, in dem Material aufgenommen wird. Obwohl dieses Material sich außerhalb des Schneckengewindes und nicht in einem Schneckengang befindet und daher von der Schnecke nicht direkt erfasst wird, bewirkt dies nicht eine Reduzierung der Förderleistung der Schnecke.

Vielmehr ergibt sich überraschend, dass die Materialanteile, die sich in den Aufnahmeräumen außerhalb des Schneckenumfangs befinden, sich mit den Anteilen des Materials verzahnen können, die sich radial weiter innen, nämlich in den Schneckengängen befinden und in der Schnecke transportiert werden. Voraussetzung ist dafür, dass das zu fördernde Gut die entsprechenden Materialeigenschaften aufweist und beispielsweise faserig vorliegt oder eine ausreichende Oberflächenrauigkeit aufweist, wie dies z.B. bei Holzhackschnitzeln, Kunststoffabfällen oder dergleichen der Fall ist. Durch diesen Verzahnungseffekt zwischen dem radial äußeren Material und dem Material innerhalb des Schneckengangs wird ein großer Anteil des der Schnecke zugeführten Materials in Längsrichtung transportiert, so dass eine dementsprechend hohe Förderleistung der Schnecke erreicht wird.

Die Vertiefungen zwischen den Rippen können vorteilhaft in Umfangsrichtung einen keilförmigen Querschnitt aufweisen. An den tiefsten Abschnitt dieser Vertiefung schließt dann eine Rippe der Auskleidung an, so dass in Umfangsrichtung der Auskleidung eine nach innen vorspringende Stufe geschaffen wird. Eine derartig ausgestaltete Auskleidung kann so ausgerichtet im Schneckengehäuse montiert werden, dass entsprechend der Drehrichtung der Schnecke das zu fördernde Gut gegen die Stufe geführt wird, wodurch der Mitnahmeeffekt verbessert wird, der sich zwischen den Materialanteilen im Schneckengang und in Materialanteilen in der Vertiefung ergibt. Für diesen Mitnahmeeffekt ist die Stufe selbst wesentlich, nicht jedoch die keilförmige Querschnittskontur der Vertiefung. Diese bewirkt vielmehr, dass eine vergleichsweise hohe Stufe mit einem möglichst geringen Volumeninhalt der Vertiefung erreicht werden kann, so dass die nicht im Schneckengang befindlichen Materialanteile möglichst gering gehalten werden können.

Um auch im Reversierbetrieb der Schnecke, wenn diese sich in entgegengesetzter Drehrichtung dreht, den gewünschten Mitnahmeeffekt zu gewährleisten, kann vorteilhaft auch entgegen der normalen Drehrichtung die oben erwähnte keilförmige Vertiefung mit anschließender Stufe in der inneren Oberfläche der Auskleidung geschaffen sein. Insbesondere kann dabei vorgesehen sein, dass diese entgegengesetzten Stufen in geringerer Anzahl vorliegen, beispielsweise nur eine einzige derartige Stufe, da der Reversierbetrieb im Vergleich zur Haupt-Drehrichtung der Schnecke nur für vergleichsweise kurze Betriebszeiten genutzt wird, beispielsweise um eine verstopfte Schnecke wieder frei zu bekommen. Die Mehrzahl der Vertiefungen und der Stufen kann daher so ausgerichtet sein, dass sie wie weiter oben erläutert für die Haupt-Drehrichtung der Schnecke den gewünschten Mitnahmeeffekt bewirken.

Die Schwächungslinien bzw. Biegelinien, die durch die in Längsrichtung verlaufenden Einkerbungen geschaffen werden und die gewünschte Verformbarkeit der Auskleidung bei deren Montage ermöglichen, können in einer Ausgestaltung allein durch die Vertiefungen selbst geschaffen werden, also durch die nutförmigen Bereiche zwischen benachbarten Rippen. Vorteilhaft jedoch können auch innerhalb der Rippen Einkerbungen verlaufen, so dass eine besonders formtreue Anpassung der Auskleidung an die Querschnittskontur des Schneckengehäuses möglich ist. Aus diesem Grund können auch im Bereich der Vertiefungen Einkerbungen vorgesehen sein, wenn das Material der Auskleidung auch im Bereich der Vertiefungen eine dafür ausreichende Wandstärke aufweist.

In einer Ausgestaltung können die Einkerbungen an der Außenseite der Auskleidung vorgesehen sein, so dass der Querschnitt der Einkerbungen aufgespreizt wird, wenn die Auskleidung U-förmigen oder ringförmig gebogen wird. In einer anderen Ausgestaltung können die Einkerbungen allerdings auch in der inneren Oberfläche der Auskleidung münden. Die Einkerbungen müssen in diesem Fall ausreichend breit ausgestaltet sein, damit sie bei der Verformung der Auskleidung zusammengedrückt werden können. Die dementsprechend nicht glatte, sondern mit den Rillen der Einkerbungen versehene innere Oberfläche der Auskleidung unterstützt ähnlich wie die oben beschriebenen Stufen die Förderleistung der Schnecke: während es für die Materialschonung der Schnecke, für die erforderliche Antriebsleistung der Schnecke und für eine möglichst lange Standzeit der Auskleidung vorteilhaft ist, wenn der Reibungswiderstand zwischen der Schnecke und der Auskleidung möglichst gering ist, kann das Problem bestehen, dass der Förderwiderstand in Längsrichtung der Schnecke größer ist als der Reibungswiderstand in Umfangsrichtung der Schnecke. Dies kann dazu führen, dass Material in Umfangsrichtung der Schnecke umläuft, ohne in Längsrichtung mitgenommen zu werden. Die Oberflächenprofilierung der Auskleidung bewirkt einen erhöhten Reibungswiderstand des Materials in Umfangsrichtung der Schnecke, so dass der Förderwiderstand im Vergleich dazu leichter überwunden werden kann, das Material dementsprechend in Längsrichtung der Schnecke mitgenommen wird und eine dementsprechend hohe Förderleistung der Schnecke resultiert.

Ausführungsbeispiele der Erfindung werden anhand der rein schematischen Darstellungen nachfolgend näher erläutert. Dabei zeigt
- Fig. 1: eine perspektivische Ansicht auf ein erstes Ausfüh-rungsbeispiel einer Schneckengehäuseauskleidung, für einen Schneckentrog,
- Fig. 2: eine Stirnansicht auf die Auskleidung von Fig. 1,
- Fig. 3: eine Stirnansicht auf die flach liegende Auskleidung von Fig. 1,
- Fig. 4: eine Stirnansicht auf einen Schneckenförderer unter Verwendung der Auskleidung von Fig. 1 bis 3, und
- Fig. 5: einen Querschnitt durch ein zweites Ausführungsbei-spiel einer Schneckengehäuseauskleidung, für ein Schneckenrohr.

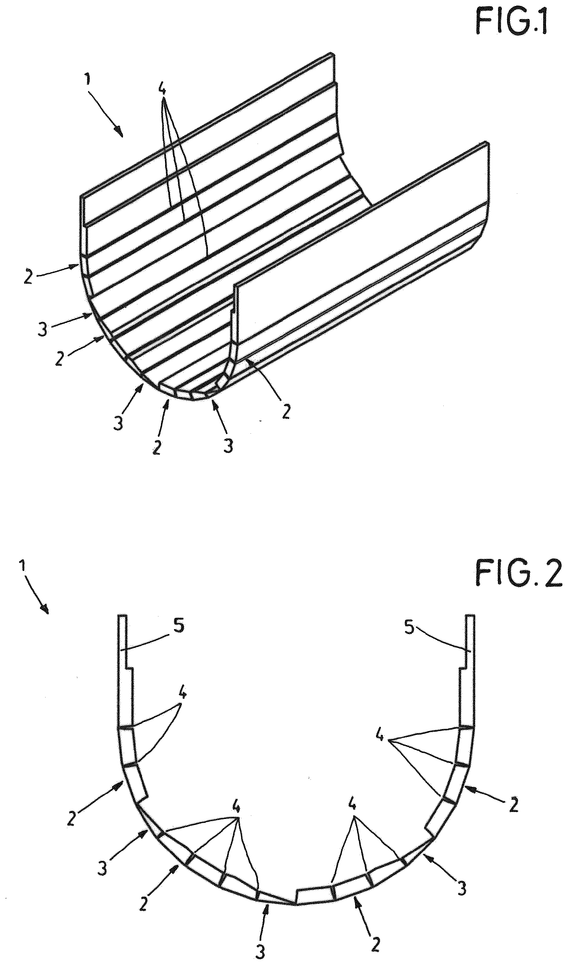

In Fig. 1 ist eine kurz als Auskleidung 1 bezeichnete Schneckengehäuseauskleidung dargestellt, die U-förmig gebogen zur Verwendung in einem Schneckentrog bestimmt ist. Die Auskleidung 1 weist mehrere Rippen 2 auf sowie dazwischen verlaufende Vertiefungen 3. Sowohl in die Rippen 2 als auch in die Vertiefungen 3 sind jeweils Einkerbungen 4 eingebracht, die sich ebenfalls in Längsrichtung der Auskleidung 1 und dementsprechend in Längsrichtung der Schnecke und auch des Schneckengehäuses erstrecken.

Fig. 2 zeigt die Auskleidung 1 in einer Stirnansicht. An den beiden Längsrändern weist die Auskleidung 1 jeweils eine Halteleiste 5 auf. Aufgrund der gekrümmten Formgebung der Auskleidung 1 weisen die Einkerbungen 4, die auf der radial inneren Oberfläche der Auskleidung 1 münden, jeweils eine vergleichsweise geringe Breite auf.

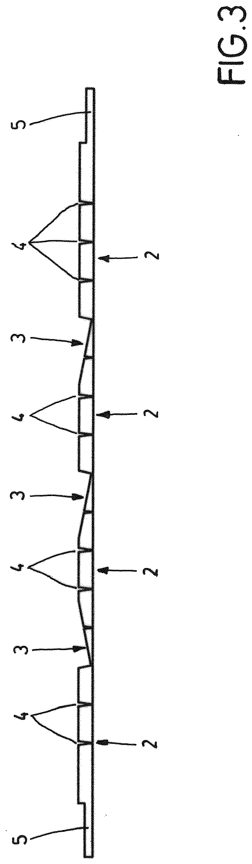

Fig. 3 zeigt dieselbe Auskleidung 1 in einem flach ausgebreiteten Zustand, beispielsweise in einer Transportanordnung, in welcher sie zum Montageort verbracht wird. Erst dort wird sie in Anpassung an den Schneckentrog passend gebogen und in die aus Fig. 1 und 2 ersichtliche Form gebracht. In der flachen Ausrichtung der Fig. 3 sind die Einkerbungen 4 jeweils weiter geöffnet. Insbesondere ist ersichtlich, dass die Einkerbungen 4 jeweils einen V-förmigen Querschnitt aufweisen, der sich zur inneren Oberfläche der Auskleidung 1 hin erweitert.

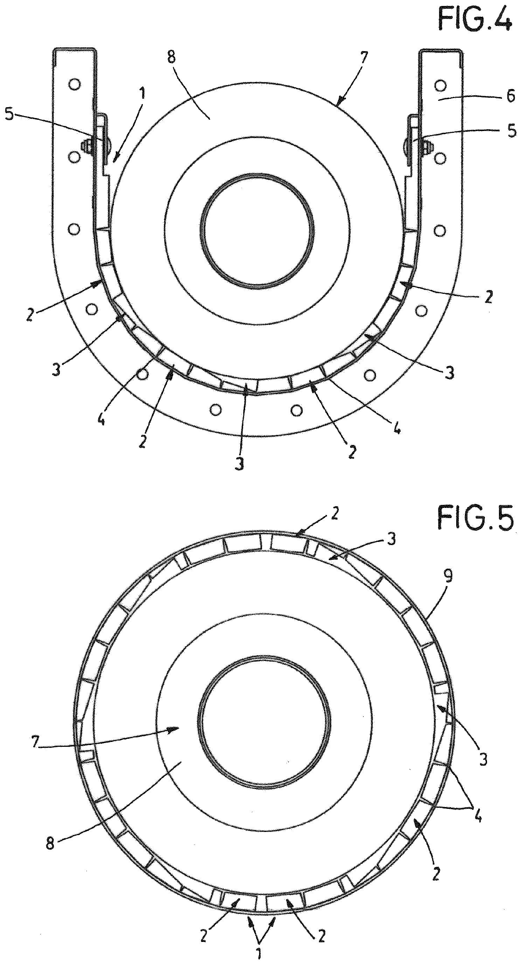

Fig. 4 zeigt die Auskleidung 1 im eingebauten Zustand, nämlich auf der Innenseite eines Schneckentrogs 6. Die Befestigung der Auskleidung 1 erfolgt ausschließlich entlang ihrer beiden Halteleisten 5, so dass der für die Montage erforderliche Zeitaufwand dementsprechend gering ist. Eine Förderschnecke 7 mit einem wendeiförmig umlaufenden Schneckengewinde 8 ist innerhalb des Schneckentrogs 6 und der Auskleidung 1 angeordnet, und es ist ersichtlich, wie sich durch die Vertiefungen 3 keilförmige Aufnahmeräume außerhalb der Schnecke 7 ergeben.

In Fig. 5 ist ein Schneckengehäuse in Form eines Rohrs 9 dargestellt, welches mit zwei Auskleidungen 1 versehen ist, welche gemeinsam fast vollständig ringförmig die Schnecke 7 umgeben. Im Unterschied zu dem Ausführungsbeispiel der Fig. 1 bis 4 weisen die beiden Auskleidungen 1 in Fig. 5 keine Halteleisten auf, sondern bilden an ihren jeweiligen beiden Längsrändern jeweils ebenfalls Rippen 2 aus.

Abweichend von den dargestellten Ausführungsbeispielen können die Einkerbungen 4 entfallen, wenn beispielsweise im Bereich der Übergänge von einer Vertiefung 3 zu einer Rippe 2 eine Biegelinie geschaffen wird und die Anzahl derartiger Biegelinien für das jeweilige Schneckengehäuse ausreichend ist, um die Auskleidung 1 ausreichend formtreu an das Gehäuse anlegen zu können.

### Bezugszeichen:

- 1: Auskleidung
- 2: Rippe
- 3: Vertiefung
- 4: Einkerbung
- 5: Halteleiste
- 6: Schneckentrog
- 7: Schnecke
- 8: Schneckengewinde
- 9: Rohr

## Patentansprüche

1. Schneckengehäuseauskleidung (1), die dazu bestimmt ist, in einem eine Förderschnecke (7) aufnehmenden, als Trog (6) oder Rohr (9) ausgestalteten Gehäuse zwischen der Schnecke (7) und dem Gehäuse angeordnet zu werden, wobei die Auskleidung an ihrer zur Schnecke (7) gerichteten inneren Oberfläche aus einem gleitfreudigen Material besteht
und in Umfangsrichtung profiliert ist, derart, dass die Auskleidung (1) in Längsrichtung einen geringeren Gleitwiderstand aufweist als in Umfangsrichtung,
**dadurch gekennzeichnet,**
**dass** die Auskleidung (1) wenigstens zwei Rippen (2) aufweist, die sich in Längsrichtung erstrecken und miteinander durch einen nutförmigen Bereich verbunden sind, in welchem die Auskleidung (1) in ihrer inneren Oberfläche eine sich in Längsrichtung erstreckende Vertiefung (3) aufweist, und dass die Auskleidung (1) in Längsrichtung erstreckende Einkerbungen (4) aufweist, entlang welcher die Auskleidung (1) eine reduzierte Wandstärke aufweist derart, dass die Auskleidung (1) bei Raumtemperatur zu einem U-förmigen oder im Wesentlichen ringförmigen Querschnitt verformbar ist.

2. Schneckengehäuseauskleidung nach Anspruch 1,
**dadurch gekennzeichnet,**
**dass** ein nutförmiger Bereich eine in Umfangrichtung keilförmige Vertiefung (3) bildet,
und **dass** dem Tiefsten der Vertiefung (3) eine Rippe (2) benachbart ist, derart, dass in Umfangrichtung eine nach innen vorspringende Stufe geschaffen ist.

3. Schneckengehäuseauskleidung nach Anspruch 2,
**dadurch gekennzeichnet,**
**dass** ein zweiter nutförmiger Bereich in Umfangrichtung eine entgegengesetzt keilförmige Vertiefung (3) bildet und in entgegengesetzter Umfangrichtung eine nach innen vorspringende Stufe geschaffen ist.

4. Schneckengehäuseauskleidung nach einem der vorhergehenden Ansprüche,
**dadurch gekennzeichnet,**
**dass** die sich in Längsrichtung erstreckenden Einkerbungen (4) innerhalb von wenigstens einer Rippe (2) verlaufen.

5. Schneckengehäuseauskleidung nach einem der vorhergehenden Ansprüche,
**dadurch gekennzeichnet,**
**dass** die sich in Längsrichtung erstreckenden Einkerbungen (4) innerhalb von wenigstens einer Vertiefung (3) verlaufen.

6. Schneckengehäuseauskleidung nach einem der vorhergehenden Ansprüche,
**dadurch gekennzeichnet,**
**dass** die sich in Längsrichtung erstreckenden Einkerbungen (4) in der inneren Oberfläche der Auskleidung (1) münden.
